# EUROPEAN PATENT SPECIFICATION

(11) **EP 4 083 856 B1**
(45) Date of publication and mention of the grant of the patent: **27.05.2026**
(21) Application number: 20905743.9
(22) Date of filing: 15.09.2020
(51) Int. Cl.: G06Q 50/40, G06Q 50/26, G06Q 10/063, G06V 10/25, G06V 10/774, G06V 20/52, G06V 10/82

(54) **EMPTY TRAY IDENTIFICATION AND APPARATUS THEREFOR**
IDENTIFIZIERUNG LEERER ABLAGEN UND ZUGEHÖRIGER APPARAT
IDENTIFICATION DE PLATEAUX VIDES ET APPAREIL ASSOCIÉ

(30) Priority: 24.12.2019 CN 201911352407
(43) Date of publication of application: 02.11.2022
(73) Proprietor: Nuctech Company Limited, TongFang Building Shuangqinglu Haidian District Beijing 100084 (CN); Tsinghua University, Beijing 100084 (CN)
(72) Inventor: CHEN, Zhiqiang, Beijing 100084 (CN); ZHANG, Li, Beijing 100084 (CN); SUN, Yunda, Beijing 100084 (CN); LI, Dong, Beijing 100084 (CN); SHI, Yating, Beijing 100084 (CN)
(74) Representative: Gunzelmann, Rainer
(86) International application number: PCT/CN2020/115268
(87) International publication number: WO 2021/128966

(56) References cited:
- CN-A- 105 427 321
- CN-A- 106 886 789
- CN-A- 109 344 685
- CN-A- 109 809 150
- CN-A- 109 961 015
- CN-A- 110 449 377
- CN-A- 110 449 377
- DE-U1- 20 007 970
- US-A1- 2012 314 222
- US-A1- 2013 141 566
- US-A1- 2013 342 353
- US-A1- 2017 083 768
- ANONYMOUS: "camera and vision system to identify "tray not empty" CMUcam - Using Arduino / Project Guidance - Arduino Forum", 30 September 2014 (2014-09-30), XP093113212, Retrieved from the Internet <URL:https://forum.arduino.cc/t/camera-and-vision-system-to-identify-tray-not-empty-cmucam/259944/4> [retrieved on 20231218]

## Description

### TECHNICAL FIELD

The present disclosure relates to a field of intelligent travel inspection, and more particularly, relates to a method for recognizing an empty tray, an apparatus for recognizing an empty tray, an electronic device, and a computer-readable storage medium.

### BACKGROUND

In a traditional travel inspection process, a security inspector guides a passenger to put a luggage item into a tray in a certain manner, and then the security inspector determines whether the luggage carried by the passenger complies with regulations according to an image obtained after the luggage passes through a luggage scanning device such as an item machine or a CT machine, where a suspicious luggage will be treated with a security inspection. After the passenger takes away the luggage from the tray, the security inspector takes back the empty tray for reuse. As a result, the work for the security inspector is very hard and heavy.

Therefore, there is a need for an efficient and accurate method and apparatus to automatically recognize whether a tray is an empty tray or not, so as to realize an automatic return of an empty tray without a security inspector taking back the empty tray for reuse, thereby reducing the work pressure of a security inspector and improving the efficiency of the security inspection.

A method of identifying a tray that is not empty is discussed by Anonymous: "camera and vision system to identify "tray not empty" CMUcam - Using Arduino / Project Guidance - Arduino Forum", 30 September 2014 (2014-09-30), retrieved from the Internet: URL: https://forum.arduino.cc/t/camera-and-visoin-system-to-identify-tray-not-empty-cmucam/259944/4. Therein, a BaseImage of an empty tray is compared with an image taken when a machine passes over the tray so as to identify the existence of the object on the tray.

US 2013/141566 A1 discloses a method of processing graphical image data representing optically scanned medication-related units. Therein, the image acquisition component may be configured to generate image data responsive to an application of light to the tray, the application of light may distinguish a background field from the units disposed on the tray and the image processor may include processing circuitry configured to process the image data to identify objects that correspond to respective ones of the units from the background field. Further, brightness comparison, a model and a curve-fitting algorithm are used.

US 2012/314222 A1 discloses inspection of a conveyance system to determine a characteristic of a detected object or item in a conveyance system. An image detecting apparatus is positioned directly over a path of conveyance for the conveyor, said image detecting apparatus being oriented so as to be directed directly vertically downward. A laser source is oriented to output laser light at an angle such that the laser light is projected so as to follow or substantially follow a contour of the upper face of the conveyor. A controller electrically connected to said image detecting apparatus and said laser source. The image detecting apparatus is operative to sense a characteristic of the output laser light to detect presence of the object riding on the conveyor.

CN 110 449 377 A discloses an automatic security check system configured to identify a tag on a tray accommodating the objects to be checked.

US 2017/083768 A1 discloses a security inspection system. The system includes an image acquisition unit. Before the baggage to be inspected enters the security inspection unit, the image acquisition unit acquires an image of the baggage to be inspected and identifies the baggage identifier, and binds the acquired image of baggage to the baggage identifier.

### SUMMARY

In order to achieve the above purpose, according to a first aspect of the present disclosure, a method for recognizing an empty tray is provided in claim 1. The method, includes: receiving an image of a to-be-recognized tray from an image collection module; determining, for the image, whether a valid empty tray reference image for the image is present in a recognition module; determining, by using a first method, whether the to-be-recognized tray corresponding to the image is an empty tray based on the image and/or the valid empty tray reference image for the image, in response to a presence of the valid empty tray reference image for the image; and determining, by using a second method different from the first method, whether the to-be-recognized tray corresponding to the image is an empty tray based on the image alone, in response to an absence of the valid empty tray reference image for the image, where in a case that the tray is determined to be an empty tray, an image corresponding to the empty tray is determined to be a new valid empty tray reference image.

The valid empty tray reference image for the image is an empty tray image within a time period from a time instant, an interval between which and a receiving time of the image is a first predetermined threshold, to the receiving time of the image.

The method further includes: measuring, by using a distance measurement unit, a distance from the distance measurement unit to a bottom surface of the to-be-recognized tray or to a highest point of an upper surface of an item in the to-be-recognized tray in a vertical direction; determining the to-be-recognized tray not to be an empty tray in response to the distance being less than a second predetermined threshold; and preliminarily determining the to-be-recognized tray to be an empty tray in response to the distance being equal to the second predetermined threshold.

According to the first aspect of the present disclosure, the method may further include: initiating an operation of determining whether a valid empty tray reference image for the image is present in the recognition module, when the to-be-recognized tray is determined to be an empty tray in response to the distance being equal to the second predetermined threshold.

According to the first aspect of the present disclosure, the determining, by using a first method, whether the to-be-recognized tray corresponding to the image is an empty tray based on the image and/or the valid empty tray reference image for the image may include: calculating a difference value between each pixel in the image and a corresponding pixel in the valid empty tray reference image for the image, and calculating a sum of absolute values of respective difference values or a sum of squares of the respective difference values; determining the to-be-recognized tray corresponding to the image not to be an empty tray in response to the sum being greater than or equal to a third predetermined threshold; and determining the to-be-recognized tray corresponding to the image to be an empty tray in response to the sum being less than the third predetermined threshold.

According to the first aspect of the present disclosure, the determining, by using a first method, whether the to-be-recognized tray corresponding to the image is an empty tray based on the image and/or the valid empty tray reference image for the image may include: combining a large number of empty tray images obtained at different time instants in pairs, and combining a large number of empty tray images obtained at different time instants and a large number of non-empty tray images obtained at different time instants in pairs, so as to obtain a first sample set and a second sample set; performing a deep learning method based on the first sample set and the second sample set, so as to obtain a first recognition model; and determining whether the to-be-recognized tray corresponding to the image is an empty tray using the first recognition model.

According to the first aspect of the present disclosure, the determining, by using a second method different from the first method, whether the to-be-recognized tray corresponding to the image is an empty tray based on the image alone may include: binarizing the image to obtain a binarized image; calculating a pixel sum of pixels in the binarized image; determining the to-be-recognized tray corresponding to the image to be an empty tray in response to the pixel sum being less than a fourth predetermined threshold; and determining the to-be-recognized tray corresponding to the image not to be an empty tray in response to the pixel sum being greater than or equal to the fourth predetermined threshold.

According to the first aspect of the present disclosure, the determining, by using a second method different from the first method, whether the to-be-recognized tray corresponding to the image is an empty tray based on the image alone may include: taking a large number of empty tray images obtained at different time instants and a large number of non-empty tray images obtained at different time instants as a third sample set and a fourth sample set; performing a deep learning method based on the third sample set and the fourth sample set, so as to obtain a second recognition model; and determining whether the to-be-recognized tray corresponding to the image is an empty tray using the second recognition model.

According to the first aspect of the present disclosure, the method may further include: obtaining a region of interest ROI in the image using a third method; and determining, by using the first method or the second method, whether the to-be-recognized tray corresponding to the image is an empty tray based on the ROI, or based on both the ROI and the valid empty tray reference image for the image.

According to the first aspect of the present disclosure, the third method may include: edge detection, adaptive threshold binarization, template matching, image gradient operation, and deep learning.

According to a second aspect of the present disclosure, an apparatus for recognizing an empty tray is provided in claim 8. The apparatus includes: an image collection module configured to collect an image of a to-be-recognized tray; and a recognition module configured to perform following operations: receiving the image of the to-be-recognized tray from the image collection module; determining, for the image, whether a valid empty tray reference image for the image is present in the recognition module; determining, by using a first method, whether the to-be-recognized tray corresponding to the image is an empty tray based on the image and/or the valid empty tray reference image for the image, in response to a presence of the valid empty tray reference image for the image; and determining, by using a second method different from the first method, whether the to-be-recognized tray corresponding to the image is an empty tray based on the image alone, in response to an absence of the valid empty tray reference image for the image, where in a case that the tray is determined to be an empty tray, an image corresponding to the empty tray is determined to be a new valid empty tray reference image.

According to a third aspect of the present disclosure, an electronic device is provided, which may include: one or more processors; and a memory configured to store one or more programs, where the one or more programs, when executed by the one or more processors, cause the one or more processors to implement the method according to the first aspect.

According to a fourth aspect of the present disclosure, storage medium having executable instructions stored thereon is provided, where the instructions, when executed by a processor, cause the processor to implement the method according to the first aspect.

Based on the above aspects provided in the present disclosure, it is possible to automatically recognize whether a tray is an empty tray in an intelligent travel inspection process, and automatically recycle an recognized empty tray without a need for a security inspector to manually retrieve the tray and put the tray onto a conveying device again, thereby reducing the workload of the security inspector significantly and avoiding retraction of a non-empty tray with a very small item due to fatigue or negligence of the security inspector.

### BRIEF DESCRIPTION OF THE DRAWINGS

The above and other embodiments and features of the present disclosure will become more apparent by describing the embodiments of the present disclosure in detail with reference to the accompanying drawings.
FIG. 1 schematically shows a system architecture of a method for recognizing an empty tray according to an embodiment of the present disclosure;
FIG. 2 schematically shows a flowchart of a first embodiment of a method for recognizing an empty tray according to an embodiment of the present disclosure;
FIG. 3 schematically shows a flowchart of a second embodiment of a method for recognizing an empty tray according to an embodiment of the present disclosure;
FIG. 4 schematically shows a flow chart of a first embodiment of determining whether a tray is an empty tray by using a first method according to an embodiment of the present disclosure;
FIG. 5 schematically shows a flow chart of a second embodiment of determining whether a tray is an empty tray by using the first method according to an embodiment of the present disclosure;
FIG. 6 schematically shows a flow chart of a first embodiment of determining whether a tray is an empty tray by using a second method according to an embodiment of the present disclosure;
FIG. 7 schematically shows a flow chart of a second embodiment of determining whether a tray is an empty tray by using the second method according to an embodiment of the present disclosure;
FIG. 8 schematically shows a block diagram of an apparatus for detecting an empty tray according to an embodiment of the present disclosure; and
FIG. 9 schematically shows a block diagram of an electronic device applicable for implementing a method for detecting an empty tray according to an embodiment of the present disclosure.

### DETAILED DESCRIPTION OF EMBODIMENTS

Specific embodiments of the present disclosure will be described in detail below. It should be noted that the embodiments described herein are only used for illustration and are not construed as limitations to the present disclosure. Numerous specific details are set forth in the following descriptions so as to provide a thorough understanding of the present disclosure. However, it is apparent to those skilled in the art that it is not necessary to implement the present disclosure using such specific details. In other embodiments, commonly known circuits, materials, or methods are not described in detail so as to avoid obscuring the present disclosure.

Throughout the description, the reference to "an embodiment", "embodiments", "an example" or "examples" means that the specific feature, structure or characteristic described in combination with the embodiment(s) or example(s) is included in at least one embodiment of the present disclosure. Therefore, the expressions "in an embodiment", "in the embodiments", "an example" or "examples" present in various parts throughout the description are not necessarily all refer to the same embodiment or the same example. Additionally, the specific feature, structure, or characteristics may be combined in one or more embodiments or examples in any appropriate combination and/or sub-combination.

It should be understood that when an element is referred to as being "coupled" or "connected" to another element, the element may be directly coupled or connected to the other element or there may exist an intermediate element. In contrast, when an element is referred to as being "directly coupled" or "directly connected" to another element, there exists no intermediate element.

Additionally, the term "and/or" used herein includes any combination and all combinations of one or more associated items listed.

It will be understood that a noun in a singular form corresponding to a term may include one or more objects unless the relevant context clearly instructs otherwise. For example, as used herein, each of the terms "A or B", "at least one of A and B", "at least one of A or B", "A, B or C", "at least one of A, B and C" and "at least one of A, B, or C" may include all possible combinations of items listed together with those in a corresponding one of the terms. For example, as used herein, terms "1^{st}" and "2^{nd}", or "first" and "second" may be used to simply distinguish a corresponding component from another component, without limiting the components in other respects (e.g., the importance or the order).

As used herein, the term "module" may include a unit implemented by hardware, software, or firmware, and may be interchangeably used with other terms (e.g., "logic", "logic block", "portion" or "circuit"). A module may be a single integrated component adapted to perform one or more functions or the smallest unit or portion of the single integrated component. For example, according to the embodiments, a module may be implemented in the form of an application specific integrated circuit (ASIC).

It should be understood that various embodiments of the present disclosure and terms used therein are not intended to limit the technical features set forth herein to specific embodiments. Unless explicitly defined otherwise herein, all terms are given their broadest possible interpretations, including meanings implied in the description and meanings understood by those skilled in the art and/or defined in dictionaries, papers, etc.

Additionally, those skilled in the art should understand that the drawings provided herein are for illustrative purposes and they are not necessarily drawn to scale. For the description of the drawings, similar reference signs may be used to refer to similar or related elements. The present disclosure will be exemplarily described below with reference to the accompanying drawings.

In order to solve the problem as set forth in the background, a method for more efficiently detecting whether a tray is an empty tray and an apparatus applicable for the method is provided in embodiments of the present disclosure. The method includes: receiving an image of a to-be-recognized tray from an image collection module; determining, for the image, whether a valid empty tray reference image for the image is present in a recognition module, where the valid empty tray reference image for the image is an empty tray image within a time period from a time instant, an interval between which and a receiving time of the image is a first predetermined threshold, to the receiving time of the image; by using a first method, determining whether the to-be-recognized tray corresponding to the image is an empty tray based on the image and/or the valid empty tray reference image for the image, in response to a presence of the valid empty tray reference image for the image; and by using a second method different from the first method, determining whether the to-be-recognized tray corresponding to the image is an empty tray based on the image alone, in response to an absence of the valid empty tray reference image for the image. In a case that the tray is determined to be an empty tray, an image corresponding to the empty tray is determined to be a new valid empty tray reference image.

The present disclosure will be described in detail below with reference to the accompanying drawings and in combination with specific embodiments.

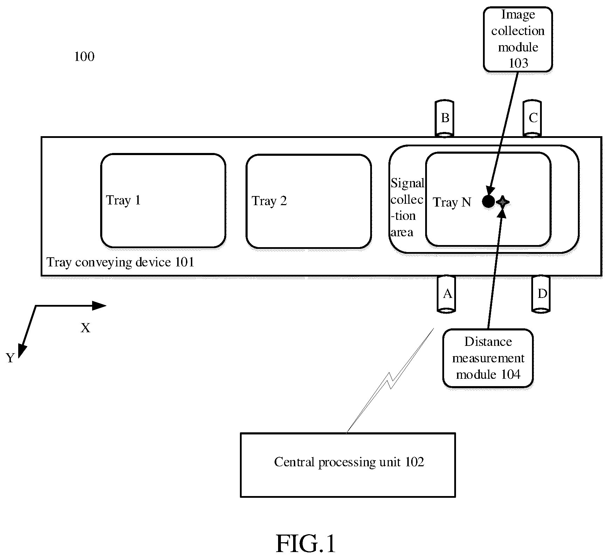

FIG. 1 schematically shows a system architecture of a method for recognizing an empty tray according to an embodiment of the present disclosure. The system architecture 100 may include a tray conveying device 101, a central processing unit 102, an image collection module 103, and an optional distance measurement module 104.

As shown in the figure, the tray conveying device 101 may be configured to convey a tray along a first direction X (a horizontal direction).

A signal collection area is provided at a right part of the tray conveying device 101, and two pairs of photoelectric switches (where A and B form one pair, and C and D form the other pair) are provided on the left and right sides of the signal collection area.

In an exemplary embodiment, when a tray (e.g., the tray N in FIG. 1) completely enters the signal collection area and blocks the two pairs of photoelectric switches, the photoelectric switches change their states (e.g., from a state "0" in a case of no blocking to a state "1" in a case of blocking, or alternatively, from the state "1" in the case of no blocking to the state "0" in the case of blocking) and send a signal indicating the change of the states to the central processing unit 102.

The central processing unit 102 may be configured to send an activation signal to the image collection module 103 and the optional distance measurement module 104 after receiving the signal indicating the change of the states of the photoelectric switches, so as to cause the image collection module 103 and the distance measurement module 104 to collect data.

In another exemplary embodiment, when the entire tray (e.g., the tray N in FIG. 1 ) enters the signal collection area and blocks the two pairs of photoelectric switches, the photoelectric switches switch from being at a low level (e.g., the state "0") to being at a high level (e.g., the state "1"), or from being at a high level (e.g., the state "1") to being at a low level (e.g., the state "0"), and the central processing unit 102 causes the image collection module 103 and the optional distance measurement module 104 to collect information continuously in response to the photoelectric switches being at the high level (e.g., the state "1") or the low level (e.g., the state "0") after the photoelectric switches change their state.

In this case, in order to prevent the heavy computation burden due to the image collection module continuously capturing images of the same tray and the distance measurement module continuously measuring distances for the same tray, for example, a second predetermined time period may be set such that a next image and/or distance may be obtained and received after the second predetermined time period, which is counted from a time instant at which a current image and/or distance is received. This may effectively reduce the computation amount for the central processing unit, save storage space for the memory, lighten the workload for the image collection module and the distance measurement module, etc.

In an exemplary embodiment, the data may include an image obtained in a manner that the image collection module 103 captures an image of a tray entering the signal collection area. In a case that the distance measurement module 104 is provided in the system architecture 100, the data may include a distance from the distance measurement module 104 to a point closest to the distance measurement module 104 in a vertical direction (the direction Y in FIG. 1, the direction Y is perpendicular to both the direction X and a bottom surface of the tray), where the distance is measured by the distance measurement module 104.

The image collection module 103 and the optional distance measurement module 104 transmit the collected data to the central processing unit 102, so as to determine whether the tray is an empty tray, which will be described in detail below with reference to other figures.

In an exemplary embodiment, the image collection module 103 may be a camera taking static pictures, or a video camera capturing videos.

In an exemplary embodiment, preferably, the image collection module 103 may be configured to be arranged right above a center point of the signal collection area.

More preferably, the image collection module 103 is arranged at a location 1m away from the center point of the signal collection area.

In an exemplary embodiment, preferably, a center point of a bottom surface of the tray N may coincide with the center point of the signal collection area.

Although only one image collection module is shown in FIG. 1, those skilled in the art should understand that two or more image collection modules may be provided. In this case, image collection modules 103 may be configured to be arranged right above any point in the signal collection area, respectively.

The main function of a distance measurement module is to prevent a tray from being mistaken for an empty tray due to a large item placed on the tray.

In an exemplary embodiment, preferably, the distance measurement module 104 may be configured to be arranged right above the center point of the signal collection area.

More preferably, the distance measurement module is arranged at a location 1m away from the center point of the signal collection area.

In an alternative embodiment, in a case that a plurality of distance measurement modules are provided, the distance measurement modules 104 may be configured to be arranged right above any point in the signal collection area.

In an exemplary embodiment, in a case that the tray is an empty tray, the point closest to the distance measurement module 104 is a point on an upper bottom surface of the tray. In this case, the distance from the distance measurement module 104 to the bottom surface of the empty tray, which is measured by the distance measurement module 104, may be set as a second predetermined threshold which is used to determine whether there is an item placed in the tray.

Specifically, in a case that there is an item placed in the tray, the distance from the distance measurement module 104 to the upmost point of the item, which is measured by the distance measurement module 104, is necessarily less than the second predetermined threshold (i.e., the distance from the distance measurement module 104 to the bottom surface of the empty tray measured by the distance measurement module 104). At this time, it is determined that the tray is not an empty tray.

Although only one distance measurement module 104 is shown in FIG. 1, those skilled in the art should understand that a plurality of distance measurement modules 104 may be provided above the tray in the signal collection area. In this case, it may also be determined whether the tray is an empty tray by comparing distances from the respective distance measurement modules to the points closest to them, where the distances are measured by the respective distance measurement modules.

Specifically, in a case that a plurality of distance measurement modules are provided, if the distances measured by the respective distance measurement modules are not consistent, it indicates that there is an item placed in the tray, and at this time, the tray is determined to be a non-empty tray. In contrast, if the distances measured by the respective distance measurement modules are consistent (all equal to the second predetermined threshold), the tray is determined to be an empty tray.

The central processing unit 102 may include: a distance recognition module configured to determine whether a tray is an empty tray based on a distance received from the distance measurement module 104; and an image recognition module configured to determine whether a tray is an empty tray based on an image received from the image collection module 103.

Detailed operations of the distance recognition module and the image recognition module will be described below.

The central processing module 102 may be any suitable electronic device provided with a processing unit, such as a desktop computer, a tablet computer, a laptop computer, and a smart phone.

The central processing unit 102 may further include a memory (not shown), a communication module (not shown), etc.

The processor of the central processing unit 102 may be configured to receive data from the image collection module 103 and the optional distance measurement module, so as to determine whether the tray is an empty tray based on the received data.

The memory of the central processing unit 102 may store data, instructions, etc., which are related to the recognition of an empty tray. Those skilled in the art should understand that the memory of the central processing unit 102 may store various appropriate information as the case may be, which will not be described here in detail.

The communication module in the central processing unit 102 may support establishing a direct (e.g., wired) communication channel or a wireless communication channel between the central processing unit 102 and an external electronic device, to communicate with the external electronic device via the established communication channel. For example, the communication module sends instructions to the image collection module 103 and/or the distance measurement module 104 via a network, and receives data from the image collection module 103 and/or the distance measurement module 104 via the network.

The communication module may include one or more communication processors capable of independently operating with a processor (e.g., an application processor (AP)), and support the wired and/or wireless communication. According to the embodiment of the present disclosure, the communication module may include a wireless communication module (e.g., a cellular communication module, a short-range wireless communication module, or a Global Navigation Satellite System (GNSS) communication module) or a wired communication module (e.g., a Local Area Network (LAN) communication module or a Power Line Communication (PLC) module). A respective one of these communication modules may communicate with an external electronic device via a first network (e.g., a short-range communication network such as Bluetooth, Wireless-Fidelity (Wi-Fi) Direct, or Infrared Data Association (IrDA)) or a second network (e.g., a long-range communication network, such as a cellular network, the Internet, or a computer network (e.g., a LAN or a Wide Area Network (WAN)). These various types of communication modules may be implemented as a single component (e.g., a single chip), or may be implemented as a plurality of components (e.g., a plurality of chips) that are separated from one another. The wireless communication module may identify and authenticate the electronic device in the communication network (e.g., the first network or the second network) using user information (e.g., International Mobile Subscriber Identity (IMSI)) stored in a user identification module.

Additionally, the central processing unit 102 may further include a display, a microphone, a speaker, or the like, to display, broadcast a state of a tray (i.e., whether the tray is an empty tray or a non-empty tray), or raise an alarm.

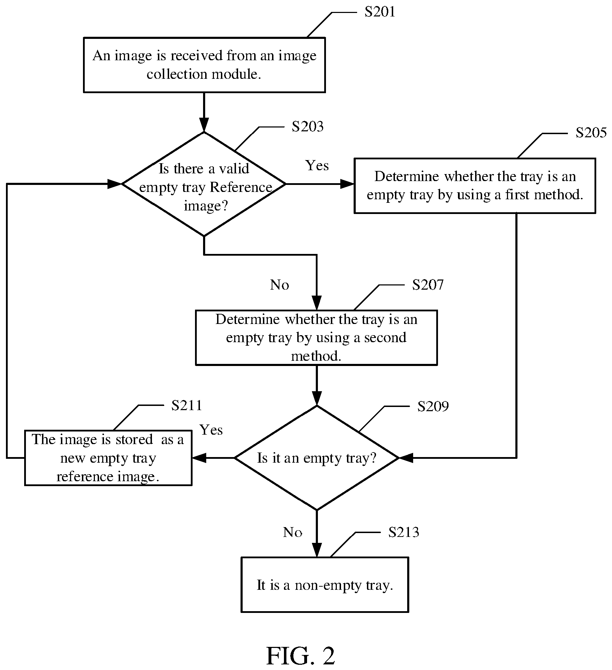

FIG. 2 schematically shows a flowchart of a first embodiment of a method for recognizing an empty tray according to an embodiment of the present disclosure.

As shown in FIG. 2, the method includes the following operations.

In operation S201, the central processing unit 102 receives an image from the image collection module 103.

In operation S203, for the received image, the central processing unit 102 determines whether there is a valid empty tray reference image for the image.

In an exemplary embodiment, the valid empty tray reference image for the image may be an empty tray image within a time period from a time instant, an interval between which and a receiving time of the image is a first predetermined threshold, to the receiving time of the image.

Exemplarily, the first predetermined threshold is 2 min.

Exemplarily, a time stamp may be added to the image at the time instant the image is received, or the image may be stored in association with the time instant the image is received, so as to determine, for the received image, whether an empty tray image which is received closest in time is a valid empty tray reference image for the received image.

In the present disclosure, a purpose of setting a valid empty tray reference image is to effectively eliminate the influence of lighting on the image. The lighting is substantially indistinguishable during a short time period, and thus an image of a tray being recognized at present has substantially the same noise caused by the lighting as a valid empty tray reference image for it. Therefore, the influence of the lighting may be excluded, when determining whether the tray in the image is an empty tray based on the image of the tray being recognized and its valid empty tray reference image.

In operation S205, in response to a presence of the valid empty tray reference image for the received image, by using a first method, it is determined whether the tray corresponding to the image is an empty tray based on the received image and/or the valid empty tray reference image for the image.

In an exemplary embodiment, the first method may include a difference image method and a deep learning method. This will be described in detail below.

In operation S207, in response to an absence of the valid empty tray reference image for the received image, by using a second method different from the first method, it is determined whether the tray corresponding to the received image is an empty tray, based on the received image alone.

In operation S209, it is determined whether the tray corresponding to the received image is an empty tray. In a case that the tray is determined to be an empty tray, the process proceeds to operation S211; and in a case that the tray is determined not to be an empty tray, the process proceeds to operation S213.

In operation S211, since the tray is determined to be an empty tray, the empty tray may be automatically retrieved for reuse, and the image of the tray which is determined to be an empty tray is stored as a new reference empty tray image. At this time, the process proceeds from operation S211 to operation S203, so as to apply the newly determined reference empty tray image to the operation performed in operation S203, thereby determining whether the newly determined reference empty tray image is a valid empty tray reference image for an image to be recognized thereafter.

In operation S213, it is determined that the tray is a non-empty tray.

In an exemplary embodiment, at this time, the tray is fixed in the signal collection area without moving, the central processing unit starts timing from a time instant when the tray is determined not to be an empty tray, and in a case that a timing period exceeds the first predetermined time period, the central processing unit 102 raises an alarm.

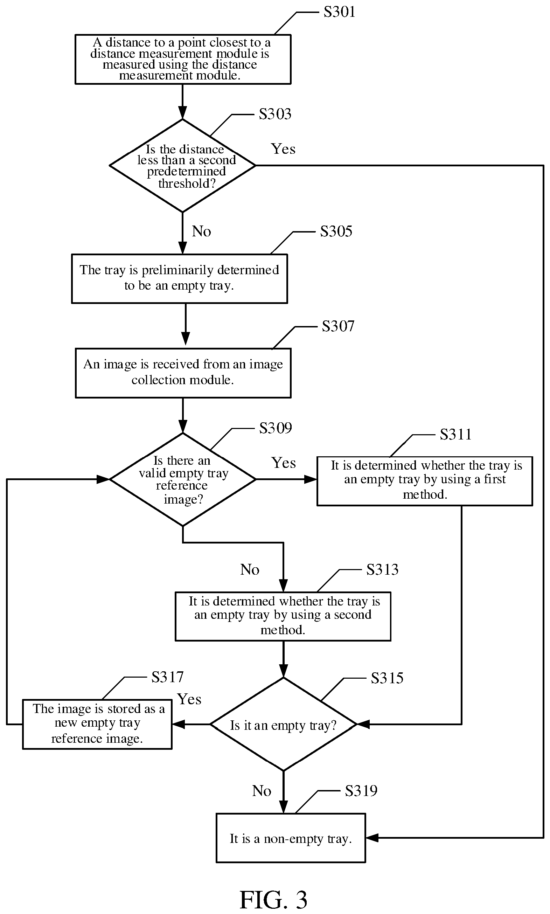

FIG. 3 schematically shows a flowchart of a second embodiment of a method for recognizing an empty tray according to an embodiment of the present disclosure.

As shown in FIG. 3, the method includes the following operations.

In operation S301, a distance to a point closest to the distance measurement module is measured by using the distance measurement module.

In operation S303, it is determined whether the measured distance is less than or equal to the second predetermined threshold.

In the present disclosure, the second predetermined threshold may be a distance from the distance measurement module to an upper surface of an empty tray.

In a case that the measured distance is less than the second predetermined threshold, the process proceeds to operation S319, determining that there is an item placed in the tray. As such, a point on a top surface of the item is the point closest to the distance measurement module.

In a case where the measured distance is equal to the second predetermined threshold, the process proceeds to operation S305, and the tray is preliminarily determined to be an empty tray.

Then, the process starts to perform operations S307 to S319. Operations S307 to S319 are the same as operations S201 to S213 in FIG. 2, which will not be repeated here again.

Before determining whether the tray is an empty tray directly based on the image, the distance measured by the distance measurement module is first used to assist in determining whether the tray is an empty tray. This may effectively reduce the computation amount of the central processing unit 102.

After the distance measured by the distance measurement module has been used to determine whether the tray is an empty tray, using the image for a further determination may avoid that the distance measured by the distance measurement module is still equal to the second predetermined threshold in a case that a small item is placed in the tray and the small item is just at a corner of the tray when the distance measurement module measures the distance. At this time, it would be irresponsible to arbitrarily determine the tray to be an empty tray directly based on the distance being equal to the second predetermined threshold.

As such, in the present disclosure, the combination of the distance measured by the distance measurement module and the image recognized by the image recognition module in determining whether the tray is an empty tray may not only reduce the computation amount, but also improve the determination accuracy.

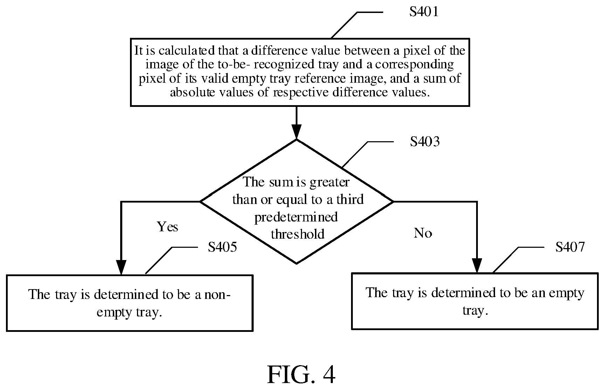

FIG. 4 schematically shows a flow chart of a first embodiment of determining whether a tray is an empty tray by using a first method according to an embodiment of the present disclosure.

As shown in FIG. 4, the method includes the following operations.

In operation S401, a difference value between a pixel in the image of the to-be-recognized tray and a corresponding pixel in the valid empty tray reference image for the image of the to-be-recognized tray is calculated pixel by pixel using a difference image method, and a sum of absolute values of respective difference values are calculated or a sum of squares of the respective difference values are calculated.

In operation S403, it is determined whether the calculated sum is greater than or equal to a third predetermined threshold.

In a case that the calculated sum is greater than or equal to the third predetermined threshold, the process proceeds to operation S405, where the tray is determined not to be an empty tray.

In a case that the calculated sum is smaller than the third predetermined threshold, the process proceeds to operation S407, where the tray is determined to be an empty tray.

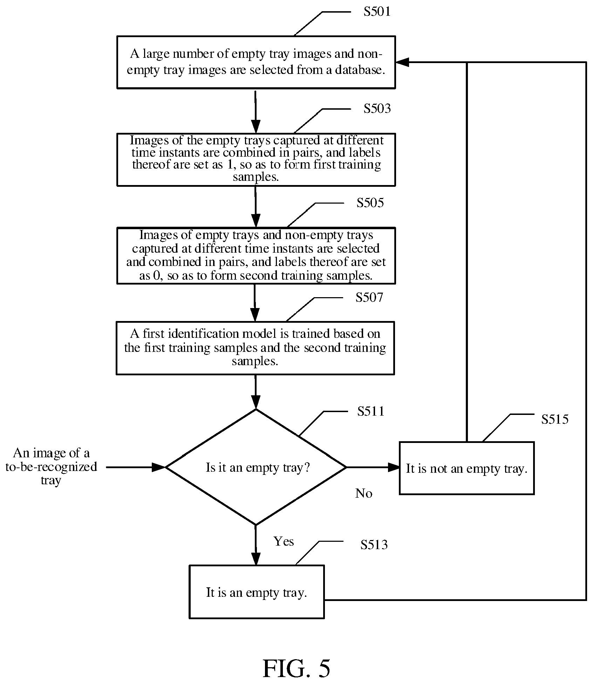

FIG. 5 schematically shows a flow chart of a second embodiment of determining whether a tray is an empty tray by using the first method according to an embodiment of the present disclosure.

As shown in FIG. 5, the method includes the following operations.

In operation S501, a large number of empty tray images and non-empty tray images are selected from a database in the memory of the central processing unit 102, where the database is for storing empty tray images and non-empty tray images.

In operation S503, images of the empty trays captured at different time instants are selected and combined in pairs, and labels of such combinations are set as 1, so as to form a large number of first training samples with label 1.

In operation S505, images of non-empty trays and empty trays captured at different time instants are selected and combined in pairs, and labels of such combinations are set as 0, so as to form a large number of second training samples with label 0.

In operation S507, a first recognition model is trained based on the first training samples and the second training samples.

When the image of the to-be-recognized tray is obtained, in operation S511, it is determined whether the image of the to-be-recognized tray is an empty tray image or a non-empty tray image based on the first recognition model.

In a case that the image is determined to be an empty tray image, the process proceeds to operation S513, where the to-be-recognized tray is determined to be an empty tray, and the empty tray image is stored in the database for performing operations in operations S503 to S507, so as to continuously update the first recognition model.

In a case that the image is determined to be a non-empty tray image, the process proceeds to operation S515, where the to-be-recognized tray is determined to be a non-empty tray, and the non-empty tray image is stored in the database for performing operations in operations S503 to S507, so as to continuously update the first recognition model.

In an example, training data includes 20,000 pairs of first training samples with label 1, and 50,000 pairs of second training samples with label 0; and test data includes 10,000 pairs of data with label 1, and 10,000 pairs of data with label 0. A deep learning classification network based on VGG16 is used for classification, and the training model may accurately distinguish between empty trays and non-empty trays. This method takes about 50 ms on TITANX and 250 ms on a CPU of Inter i7-6500U.

In the exemplary embodiments, the empty tray images are combined in pairs to form the first training samples whose labels are set as 1, and the empty tray images and the non-empty tray images are combined in pairs and their labels are set as 0, however, those skilled in the art should understand that the non-empty tray images may be combined in pairs with their labels being set as 0, while the non-empty tray images and the empty tray images may be combined in pairs with their labels being set as 1, as required.

In other embodiments, more diverse combinations may be implemented as required, and more types of labels may be set accordingly.

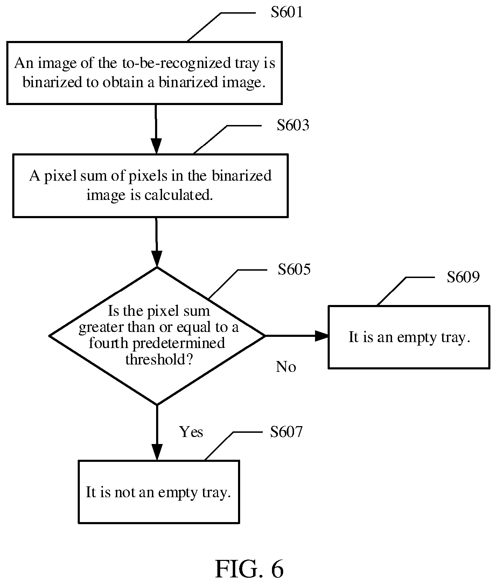

FIG. 6 schematically shows a flow chart of a first embodiment of determining whether a tray is an empty tray by using a second method according to an embodiment of the present disclosure.

As shown in FIG. 6, the method includes the following operations.

In operation S601, the image of the to-be-recognized tray is binarized so as to obtain a binarized image.

In an exemplary embodiment, the binarization process is performed using an adaptive threshold binarization method. Those skilled in the art should understand that the binarization processing may be performed by any method that is known to those skilled in the art or any method that will be developed in the future.

In operation S603, a pixel sum of pixels in the binarized image is calculated.

In operation S605, it is determined whether the calculated pixel sum is greater than or equal to a fourth predetermined threshold.

In a case that the calculated pixel sum is greater than or equal to the fourth predetermined threshold, the process proceeds to operation S607, where the tray is determined not to be an empty tray.

In a case that the calculated pixel sum is less than the fourth predetermined threshold, the process proceeds to operation S609, where the tray is determined to be an empty tray.

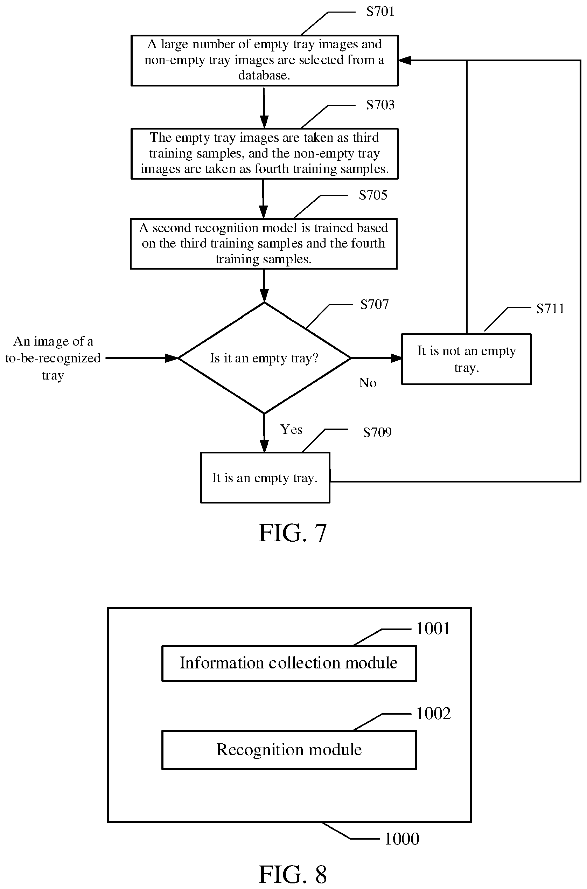

FIG. 7 schematically shows a flow chart of a second embodiment of determining whether a tray is an empty tray by using the second method according to an embodiment of the present disclosure.

As shown in FIG. 7, the method includes the following operations.

In operation S701, a large number of empty tray images and a large number of non-empty tray images are selected from the database.

In operation S703, the selected empty tray images are taken as third training samples, and the selected non-empty tray images are taken as fourth training samples.

In operation S705, a second recognition model is trained based on the third training samples and the fourth training samples.

When the image of the to-be-recognized tray is obtained, in operation S707, it is determined whether the image of the to-be-recognized tray is an empty tray based on the second recognition model.

In a case that the image is determined to be an empty tray image, the process proceeds to operation S709, and the process returns to S701 from operation S709, so as to apply a new empty tray image in a subsequent model training process, thereby continuously updating the second recognition model.

In a case that the image is determined to be a non-empty tray image, the process proceeds to operation S711, and the process returns to S701 from operation S711, so as to apply a new non-empty tray image in a subsequent model training process, thereby continuously updating the second recognition model.

In an example, an Alexnet training algorithm may be used to train the second recognition model. In the example, the training data includes 20,000 empty tray images and 20,000 non-empty tray images; and the test data includes 5,000 empty trays and 5,000 non-empty trays, where the training set and the test set do not overlap. The accuracy of the classification in a test reaches 99.9%, and it takes 4 ms on TITAN 920M and 150 ms on a CPU of Inter i7-6500U.

The above describes determining whether the to-be-recognized tray is an empty tray by using different methods based on the image of the to-be-recognized tray and/or the valid empty tray reference image.

It is noted that those skilled in the art should understand that the above recognition that is based on the image of the to-be-recognized tray and/or the valid empty tray reference image is implemented based on a matching between corresponding pixels. Any technology that is known in the art or that will be developed in the future may be used as a method or an algorithm for achieving the matching between pixels.

In an exemplary embodiment, a region of interest ROI (e.g., a region surrounded by a rim of the tray) may be further obtained in the image of the to-be-recognized tray and the valid empty tray reference image, so as to more accurately recognize whether the tray is an empty tray.

Exemplarily, the ROI region may be obtained by using one or more of methods such as an edge detection method, an adaptive threshold binarization method, a template matching method, an image gradient operation method, and a deep learning method.

Exemplarily, in a case that the edge detection is used, an edge of the tray and a rotation angle of the tray is first determined by detecting the edge of the tray, and then the ROI region of the tray is captured accurately after the tray is rotated to a right position and moved to a fixed position. When the tray is an empty tray, the accuracy of the detection of this method reaches 100%. When the tray is not an empty tray, this method may accurately detect a region of the tray unless the edge of the tray is blocked. When the edge of the tray is blocked, that the tray position is not accurately detected will cause the captured ROI region to include a region outside the tray, which may make it easy to be recognized as a non-empty tray in the subsequent recognition process. A running time of this method on a CPU of Inter i7-6500U is only 20 ms to 30 ms, which has a very low time consumption.

Exemplarily, in a case that the deep learning is used, accurate positions of trays in 5000 images are first manually delineated for training, and then a tray detection algorithm is trained using a yolov2 algorithm or a Faster Rcnn algorithm, thereby obtaining a model for recognizing the ROI region. After an image region is obtained, an ROI of the image is accurately captured. On TITAN 1080TI, it takes about 150 ms using a tray detection module of a Faster Rcnn model, and it takes about 40 ms using the yolov2 algorithm for tray detection.

Exemplarily, in a case that the adaptive threshold binarization is used, the ROI region may be easily recognized in the binarized image.

After the ROI region is obtained, it may be determined whether the image to be recognized is an empty tray image based on the ROI region and/or the valid empty tray reference image according to the operations described above.

In an exemplary embodiment, after the ROI region is obtained, the ROI region may be rotated to a position consistent with a position of an empty tray in the valid empty tray reference image, so that the ROI region is aligned with a tray region in the valid empty tray reference image.

In an exemplary embodiment, as described above, the central processing unit 102 raises an alarm when the tray is fixed in the signal collection area without moving, with a fixed time exceeding the first predetermined time period.

In an exemplary embodiment, in a case that the light intensity is excessively strong, someone blocks the light, or the like, an empty tray image may be wrongly determined as a non-empty tray image. At this time, the empty tray image will be fixed in the signal collection area without moving, resulting in an alarm being raised.

In this case, a manual intervention is required regardless of whether the first method or the second method is used.

At this time, a manual determination is required to determine whether the to-be-recognized tray is an empty tray. In a case that an image shows that the tray is an empty tray, the image corresponding to the tray is determined to be an empty tray reference image and stored, so as to be used for subsequent recognition.

On this basis, when a similar image is obtained since the light intensity is excessively strong, someone blocks the light, or the like, it may be determined to be an empty tray image based on the reference empty tray image determined through the manual intervention, thereby reducing the number of the manual interventions.

FIG. 8 schematically shows a block diagram of an apparatus for detecting an empty tray according to an embodiment of the present disclosure.

As shown in FIG. 8, an empty tray recognition device 1000 may include an image collection module 1001 and a recognition module 1002.

The image collection module 1001 may be configured to collect an image of a to-be-recognized tray.

The recognition module 1002 may be configured to perform the following operations: receiving the image of the to-be-recognized tray from the image collection module; determining, for the image, whether a valid empty tray reference image for the image is present in the recognition module, where the valid empty tray reference image for the image may be an empty tray image within a time period from a time instant, an interval between which and a receiving time of the image is a first predetermined threshold, to the receiving time of the image; by using a first method, determining whether the tray corresponding to the image is an empty tray based on the image and/or the valid empty tray reference image for the image, in response to a presence of the valid empty tray reference image for the image; and by using a second method different from the first method, determining whether the tray corresponding to the image is an empty tray based on the image alone, in response to a presence of the valid empty tray reference image for the image. In a case that the tray is determined to be an empty tray, the image corresponding to the empty tray is determined to be a new valid empty tray reference image.

In an exemplary embodiment, the empty tray recognition device 1000 may further include: a distance measurement module; a detection module configured to determine whether a valid empty tray reference image is present; a comparison and recognition module configured to perform the first method to determine whether the tray is an empty tray; a single image recognition module configured to determine whether the tray is an empty tray using the second method; and an alarm unit configured to raise an alarm when the tray is not an empty tray and the time the tray stays in the signal collection area exceeds the first predetermined time period, etc.

As required, the empty tray recognition device 1000 may further include other units or modules configured to perform the above respective operations correspondingly.

For the sake of clarity and conciseness, the respective modules and the corresponding operations performed by them will not be repeated here again.

The functions of a plurality of modules according to the embodiments of the present disclosure may be implemented within one module. A module according to the embodiments of the present disclosure may be implemented by splitting it into a plurality of modules. A module according to the embodiments of the present disclosure may be implemented, at least in part, as a hardware circuit, such as a field programmable gate array (FPGA), a programmable logic array (PLA), a system-on-chip, a system-on-substrate, a system-on-package, and an application specific integration circuit (ASIC), or may be implemented by a hardware or a firmware that integrating or encapsulating a circuit in any other reasonable manners, or may be implemented in any one of the three implementation manners of software, hardware and firmware, or in an appropriate combination of any of them. Alternatively, a module according to the embodiments of the present disclosure may be implemented, at least in part, as a computer program module which, when executed, may perform corresponding functions.

According to the embodiments of the present disclosure, at least one of the above modules may be implemented, at least in part, as a hardware circuit, such as a field programmable gate array (FPGA), a programmable logic array (PLA), a system-on-chip, a system-on-substrate, a system-on-package, and an application specific integration circuit (ASIC), or may be implemented by a hardware or a firmware that integrating or encapsulating a circuit in any other reasonable manners, or may be implemented to be any one of the three implementation manners of software, hardware and firmware, or in any appropriate combination of any of them. Alternatively, at least one of the above modules may be implemented, at least in part, as a computer program module which, when executed, may perform corresponding functions.

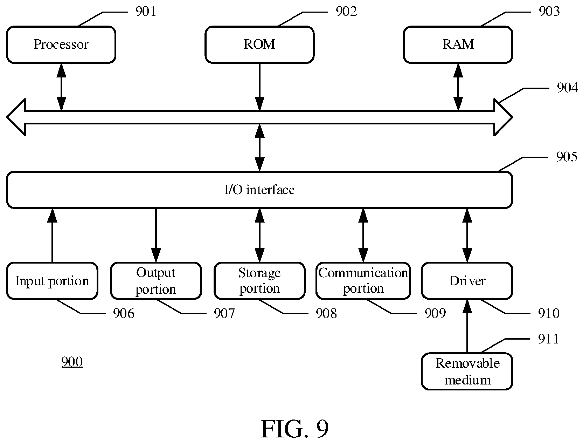

FIG. 9 schematically shows a block diagram of an electronic device applicable for implementing the above method for recognizing an empty tray according to an embodiment of the present disclosure as described above. The electronic device shown in FIG. 9 is only an example, and not construed as limiting the functions and the scope of use of the embodiments of the present disclosure.

As shown in FIG. 9, the electronic device 900 according to an embodiment of the present disclosure includes a processor 901 which may perform various appropriate operations and processes according to a program stored in a read only memory (ROM) 902 or a program loaded into a random access memory (RAM) 903 from a storage portion 808. The processor 901 may include, for example, a general-purpose microprocessor (e.g., a CPU), an instruction set processor and/or a related chipset, and/or a special-purpose microprocessor (e.g., an application specific integrated circuit (ASIC)), etc. The processor 901 may further include an on-board memory for a caching purpose. The processor 901 may include a single processing unit or a plurality of processing units for performing different operations of a method flow according to the embodiments of the present disclosure.

In the RAM 903, various programs and data necessary for an operation of the electronic device 900 are stored. The processor 901, the ROM 902, and the RAM 903 are connected to one another via a bus 904. The processor 901 performs various operations of the method flow according to the embodiments of the present disclosure by executing programs in the ROM 902 and/or the RAM 903. It is noted that the programs may also be stored in one or more memories other than the ROM 902 and the RAM 903. The processor 901 may also perform various operations of the method flow according to the embodiments of the present disclosure by executing the programs stored in the one or more memories.

According to an embodiment of the present disclosure, the electronic device 900 may further include an input/output (I/O) interface 905, which is also connected to the bus 904. The electronic device 900 may further include one or more of the following components connected to the I/O interface 905: an input portion 906 including a keyboard, a mouse, etc.; an output portion 907 including a cathode ray tube (CRT), a liquid crystal display (LCD), a speaker, etc.; a storage portion 908 including a hard disk, etc.; and a communication portion 909 including a network interface card such as a LAN card and a modem. The communication portion 909 performs a communication processing via a network such as the Internet. A drive 910 is further connected to the I/O interface 905 as required. A removable medium 911, such as a magnetic disk, an optical disk, a magneto-optical disk, and a semiconductor memory, is installed on the drive 910 as required, so that a computer program read therefrom is installed into the storage portion 908 as required.

According to an embodiment of the present disclosure, the method flow according to the embodiments of the present disclosure may be implemented as a computer software program. For example, according to an embodiment of the present disclosure, a computer program product including a computer program carried on a computer-readable storage medium is provided, where the computer program includes program codes for performing the method shown in the flowchart. In such an embodiment, the computer program may be downloaded and installed from a network via the communication portion 909, and/or installed from the removable medium 911. When the computer program is executed by the processor 901, the above functions defined in the system of the embodiments of the present disclosure are performed. According to the embodiments of the present disclosure, the systems, the apparatus, the device, the modules, the units, etc. described above may be implemented by computer program modules.

The present disclosure further provides a computer-readable storage medium. The computer-readable storage medium may be included in the apparatus/device/system described in the above embodiments, or it may exist separately without being assembled into the apparatus/device/system. The above computer-readable storage medium carries one or more programs, which, when executed, implement the method according to the embodiments of the present disclosure.

According to an embodiment of the present disclosure, the computer-readable storage medium may be a non-volatile computer-readable storage medium, including but not limited to, a portable computer disk, a hard disk, a random access memory (RAM), a read only memory (ROM), an erasable programmable read only memory (EPROM or flash memory), a portable compact disk read only memory (CD-ROM), an optical storage devices, and a magnetic storage device, or any appropriate combination of thereof. In the present disclosure, a computer-readable storage medium may be any tangible medium which contains or stores a program that may be used by or in combination with an instruction execution system, an apparatus, or a device. For example, according to an embodiment of the present disclosure, a computer-readable storage medium may include one or more memories other than the ROM 902 and/or the RAM 903 and/or the ROM 902 and the RAM 903 described above.

The flowcharts and block diagrams in the figures illustrate the system architecture, the functions, and the operations that may be implemented by the systems, the methods and the computer program products according to various embodiments of the present disclosure. In this regard, each block in the flowcharts or the block diagrams may represent a module, a program segment, or a part of codes, which include one or more executable instructions for implementing specified logical functions. It should also be noted that, in some alternative implementations, the functions noted in the blocks may occur in an order different from that noted in the figures. For example, two blocks shown in a successive manner may actually be performed substantially concurrently, or they may also be performed in a reverse order sometimes, depending on the function involved. It is also noted that each block in the block diagrams or the flowcharts, and combinations of blocks in the block diagrams or the flowcharts may be implemented in a dedicated hardware-based system that performs a specified function or operation, or may be implemented using a combination of a dedicated hardware and computer instructions.

Those skilled in the art could understand that features recited in respective embodiments and/or claims of the present disclosure may be combined and/or integrated in a variety of ways, even if such combinations or integrations are not expressly recited in the present disclosure. In particular, features recited in respective embodiments and/or claims of the present disclosure may be combined and/or integrated in a variety of ways without departing from the scope defined by the appended claims.

Embodiments of the present disclosure are described above. However, such embodiments are only for illustrative purposes, and are not construed as limiting the scope of the present disclosure. Although the embodiments are described above respectively, this does not mean that measures in the respective embodiments cannot be advantageously used in combination. The scope of the present invention is defined by the appended claims.

## Claims

1. A method for recognizing an empty tray, comprising:
measuring, by using a distance measurement unit, a distance from the distance measurement unit to a bottom surface of a to-be-recognized tray or to a highest point of an upper surface of an item in the to-be-recognized tray in a vertical direction;
determining that the to-be-recognized tray is not an empty tray in response to the distance being less than a second predetermined threshold;
preliminarily determining the to-be-recognized tray as an empty tray in response to the distance being equal to the second predetermined threshold;
receiving an image of the to-be-recognized tray, which is preliminarily determined as an empty tray, from an image collection module;
determining, for the image, whether a valid empty tray reference image for the image is present in a recognition module;
determining, by using a first method, whether the to-be-recognized tray, which is preliminarily determined as an empty tray and corresponds to the image, is an empty tray based on the image and/or the valid empty tray reference image for the image, in response to a presence of the valid empty tray reference image for the image; and
determining, by using a second method different from the first method, whether the to-be-recognized tray, which is preliminarily determined as an empty tray and corresponds to the image, is an empty tray based on the image alone, in response to an absence of the valid empty tray reference image for the image,
wherein in a case that the tray is determined to be an empty tray, an image corresponding to the empty tray is determined to be a new valid empty tray reference image; and
wherein the valid empty tray reference image for the image is an empty tray image within a time period from a time instant, an interval between which and a receiving time of the image is a first predetermined threshold, to the receiving time of the image.

2. The method for recognizing an empty tray according claim 1, wherein the determining, by using a first method, whether the to-be-recognized tray corresponding to the image is an empty tray based on the image and/or the valid empty tray reference image for the image comprises:
calculating a difference value between each pixel in the image and a corresponding pixel in the valid empty tray reference image for the image, and calculating a sum of absolute values of respective difference values or a sum of squares of the respective difference values;
determining the to-be-recognized tray corresponding to the image not to be an empty tray in response to the sum being greater than or equal to a third predetermined threshold; and
determining the to-be-recognized tray corresponding to the image to be an empty tray in response to the sum being less than the third predetermined threshold.

3. The method for recognizing an empty tray according claim 1, wherein the determining, by using a first method, whether the to-be-recognized tray corresponding to the image is an empty tray based on the image and/or the valid empty tray reference image for the image comprises:
combining a large number of empty tray images obtained at different time instants in pairs, and combining a large number of empty tray images obtained at different time instants and a large number of non-empty tray images obtained at different time instants in pairs, so as to obtain a first sample set and a second sample set;
performing a deep learning method based on the first sample set and the second sample set, so as to obtain a first recognition model; and
determining whether the to-be-recognized tray corresponding to the image is an empty tray using the first recognition model.

4. The method for recognizing an empty tray according claim 1, wherein the determining, by using a second method different from the first method, whether the to-be-recognized tray corresponding to the image is an empty tray based on the image alone comprises:
binarizing the image to obtain a binarized image;
calculating a pixel sum of pixels in the binarized image;
determining the to-be-recognized tray corresponding to the image to be an empty tray in response to the pixel sum being less than a fourth predetermined threshold; and
determining the to-be-recognized tray corresponding to the image not to be an empty tray in response to the pixel sum being greater than or equal to the fourth predetermined threshold.

5. The method for recognizing an empty tray according claim 1, wherein the determining, by using a second method different from the first method, whether the to-be-recognized tray corresponding to the image is an empty tray based on the image alone comprises:
taking a large number of empty tray images obtained at different time instants and a large number of non-empty tray images obtained at different time instants as a third sample set and a fourth sample set;
performing a deep learning method based on the third sample set and the fourth sample set, so as to obtain a second recognition model; and
determining whether the to-be-recognized tray corresponding to the image is an empty tray using the second recognition model.

6. The method for recognizing an empty tray according claim 1, further comprising:
obtaining a region of interest ROI in the image using a third method;
and
determining, by using the first method or the second method, whether the to-be-recognized tray corresponding to the image is an empty tray based on the ROI, or based on both the ROI and the valid empty tray reference image for the image.

7. The method for recognizing an empty tray according claim 6, wherein the third method comprises:
edge detection, adaptive threshold binarization, template matching, image gradient operation, and deep learning.

8. An apparatus for recognizing an empty tray, comprising:
a distance measurement module (104) configured to measure a distance from the distance measurement module (104) to a bottom surface of the to-be-recognized tray or to a highest point of an upper surface of an item in the to-be-recognized tray in a vertical direction,
a recognition module (1002) configured to:
determine that the to-be-recognized tray is not an empty tray in response to the distance being less than a second predetermined threshold; and
preliminarily determine the to-be-recognized tray as an empty tray in response to the distance being equal to the second predetermined threshold;
receiving an image of the to-be-recognized tray, which is preliminarily determined as an empty tray, from an image collection module (1001);
determining, for the image, whether a valid empty tray reference image for the image is present in the recognition module (1002);
determining, by using a first method, whether the to-be-recognized tray, which is preliminarily determined as an empty tray and corresponds to the image, is an empty tray based on the image and/or the valid empty tray reference image for the image, in response to a presence of the valid empty tray reference image for the image; and
determining, by using a second method different from the first method, whether the to-be-recognized tray, which is preliminarily determined as an empty tray and corresponds to the image, is an empty tray based on the image alone, in response to an absence of the valid empty tray reference image for the image; and
the image collection module (1001) configured to collect the image of the to-be-recognized tray, which is preliminarily determined as an empty tray,
wherein in a case that the tray is determined to be an empty tray, an image corresponding to the empty tray is determined to be a new valid empty tray reference image; and
wherein the valid empty tray reference image for the image is an empty tray image within a time period from a time instant, an interval between which and a receiving time of the image is a first predetermined threshold, to the receiving time of the image.

9. An electronic device, comprising:
one or more processors; and
a memory configured to store one or more programs, wherein
the one or more programs, when executed by the one or more processors, cause the one or more processors to implement the method according to claim 1.

10. A computer-readable storage medium having executable instructions stored thereon, wherein the instructions, when executed by a processor, cause the processor to implement the method according to claim 1.

## Patentansprüche

1. Verfahren zum Erkennen eines leeren Trays, umfassend:
Messen, unter Verwendung einer Abstandsmesseinheit, eines Abstands von der Abstandsmesseinheit zu einer Bodenfläche eines zu erkennenden Trays oder zu einem höchsten Punkt einer oberen Fläche eines Gegenstands in dem zu erkennenden Tray in einer Vertikalrichtung;
Bestimmen, dass das zu erkennende Tray kein leeres Tray ist, als Reaktion darauf, dass der Abstand kleiner als ein zweiter vorbestimmter Schwellenwert ist;
vorläufiges Bestimmen des zu erkennenden Trays als ein leeres Tray als Reaktion darauf, dass der Abstand gleich dem zweiten vorbestimmten Schwellenwert ist;
Empfangen eines Bildes des zu erkennenden Trays, das vorläufig als ein leeres Tray bestimmt wird, von einem Bilderfassungsmodul;
Bestimmen, für das Bild, ob ein gültiges leeres-Referenzbild-Tray für das Bild in einem Erkennungsmodul vorhanden ist;
Bestimmen, unter Verwendung eines ersten Verfahrens, ob das zu erkennende Tray, das vorläufig als ein leeres Tray bestimmt wird und dem Bild entspricht, ein leeres Tray ist, basierend auf dem Bild und/oder dem gültigen leeren-Referenzbild-Tray für das Bild, als Reaktion auf ein Vorhandensein des gültigen leeren-Referenzbild-Trays für das Bild; und
Bestimmen, unter Verwendung eines zweiten Verfahrens, das sich von dem ersten Verfahren unterscheidet, ob das zu erkennende Tray, das vorläufig als ein leeres Tray bestimmt wird und dem Bild entspricht, ein leeres Tray ist, basierend allein auf dem Bild, als Reaktion auf ein Fehlen des gültigen leeren-Referenzbild-Trays für das Bild,
wobei in einem Fall, dass das Tray als ein leeres Tray bestimmt wird, ein dem leeren Tray entsprechendes Bild als ein neues gültiges leeres-Referenzbild-Tray bestimmt wird; und
wobei das gültige leere-Referenzbild-Tray für das Bild ein leeres-Tray-Bild innerhalb einer Zeitperiode von einem Zeitpunkt, zwischen dem und einer Empfangszeit des Bildes ein Intervall ein erster vorbestimmter Schwellenwert ist, bis zu der Empfangszeit des Bildes ist.

2. Verfahren zum Erkennen eines leeren Trays gemäß Anspruch 1, wobei das Bestimmen, unter Verwendung eines ersten Verfahrens, ob das dem Bild entsprechende zu erkennende Tray ein leeres Tray ist, basierend auf dem Bild und/oder dem gültigen leeren-Referenzbild-Tray für das Bild, umfasst:
Berechnen eines Differenzwerts zwischen jedem Pixel in dem Bild und einem entsprechenden Pixel in dem gültigen leeren-Referenzbild-Tray für das Bild und Berechnen einer Summe absoluter Werte jeweiliger Differenzwerte oder einer Quadratsumme der jeweiligen Differenzwerte;
Bestimmen, dass das dem Bild entsprechende zu erkennende Tray kein leeres Tray ist, als Reaktion darauf, dass die Summe größer als oder gleich einem dritten vorbestimmten Schwellenwert ist; und
Bestimmen, dass das dem Bild entsprechende zu erkennende Tray ein leeres Tray ist, als Reaktion darauf, dass die Summe kleiner als der dritte vorbestimmte Schwellenwert ist.

3. Verfahren zum Erkennen eines leeren Trays gemäß Anspruch 1, wobei das Bestimmen, unter Verwendung eines ersten Verfahrens, ob das dem Bild entsprechende zu erkennende Tray ein leeres Tray ist, basierend auf dem Bild und/oder dem gültigen leeren-Referenzbild-Tray für das Bild, umfasst:
paarweises Kombinieren einer großen Anzahl von leeren-Tray-Bildern, die zu unterschiedlichen Zeitpunkten erhalten werden, und paarweises Kombinieren einer großen Anzahl von leeren-Tray-Bildern, die zu unterschiedlichen Zeitpunkten erhalten werden, und einer großen Anzahl von Nicht-leeren-Tray-Bildern, die zu unterschiedlichen Zeitpunkten erhalten werden, um dadurch einen ersten Stichprobensatz und einen zweiten Stichprobensatz zu erhalten;
Durchführen eines Deep-Learning-Verfahrens auf der Grundlage des ersten Stichprobensatzes und des zweiten Stichprobensatzes, um dadurch ein erstes Erkennungsmodell zu erhalten; und
Bestimmen, ob das dem Bild entsprechende zu erkennende Tray unter Verwendung des ersten Erkennungsmodells ein leeres Tray ist.

4. Verfahren zum Erkennen eines leeren Trays gemäß Anspruch 1, wobei das Bestimmen, unter Verwendung eines zweiten Verfahrens, das sich von dem ersten Verfahren unterscheidet, ob das dem Bild entsprechende zu erkennende Tray ein leeres Tray ist, basierend allein auf dem Bild, umfasst:
Binarisieren des Bildes, um dadurch ein binarisiertes Bild zu erhalten;
Berechnen einer Pixelsumme von Pixeln in dem binarisierten Bild;
Bestimmen, dass das dem Bild entsprechende zu erkennende Tray ein leeres Tray ist, als Reaktion darauf, dass die Pixelsumme kleiner als ein vierter vorbestimmter Schwellenwert ist; und
Bestimmen, dass das dem Bild entsprechende zu erkennende Tray kein leeres Tray ist, als Reaktion darauf, dass die Pixelsumme größer als oder gleich dem vierten vorbestimmten Schwellenwert ist.

5. Verfahren zum Erkennen eines leeren Trays gemäß Anspruch 1, wobei das Bestimmen, unter Verwendung eines zweiten Verfahrens, das sich von dem ersten Verfahren unterscheidet, ob das dem Bild entsprechende zu erkennende Tray ein leeres Tray ist, basierend allein auf dem Bild, umfasst:
Verwenden einer großen Anzahl von leeren-Tray-Bildern, die zu unterschiedlichen Zeitpunkten erhalten werden, und einer großen Anzahl von Nicht-leeren-Tray-Bildern, die zu unterschiedlichen Zeitpunkten erhalten werden, als einen dritten Stichprobensatz und einen vierten Stichprobensatz;
Durchführen eines Deep-Learning-Verfahrens auf der Grundlage des dritten Stichprobensatzes und des vierten Stichprobensatzes, um dadurch ein zweites Erkennungsmodell zu erhalten; und
Bestimmen, ob das dem Bild entsprechende zu erkennende Tray unter Verwendung des zweiten Erkennungsmodells ein leeres Tray ist.

6. Verfahren zum Erkennen eines leeren Trays gemäß Anspruch 1, ferner umfassend:
Erhalten einer Region of interest ROI in dem Bild unter Verwendung eines dritten Verfahrens; und
Bestimmen, unter Verwendung des ersten Verfahrens oder des zweiten Verfahrens, ob das dem Bild entsprechende zu erkennende Tray ein leeres Tray ist, basierend auf der ROI oder basierend sowohl auf der ROI als auch dem gültigen leeren-Referenzbild-Tray für das Bild.

7. Verfahren zum Erkennen eines leeren Trays gemäß Anspruch 6, wobei das dritte Verfahren umfasst:
Kantendetektion, adaptive Schwellenwert-Binarisierung, Template-Matching, Bildgradientenoperation und Deep Learning.

8. Vorrichtung zum Erkennen eines leeren Trays, umfassend:
ein Abstandsmessmodul (104), das konfiguriert ist, einen Abstand von dem Abstandsmessmodul (104) zu einer Bodenfläche des zu erkennenden Trays oder zu einem höchsten Punkt einer oberen Fläche eines Gegenstands in dem zu erkennenden Tray in einer Vertikalrichtung zu messen,
ein Erkennungsmodul (1002), das konfiguriert ist:
zu bestimmen, dass das zu erkennende Tray kein leeres Tray ist, als Reaktion darauf, dass der Abstand kleiner als ein zweiter vorbestimmter Schwellenwert ist; und
das zu erkennende Tray vorläufig als ein leeres Tray zu bestimmen als Reaktion darauf, dass der Abstand gleich dem zweiten vorbestimmten Schwellenwert ist;
Empfangen eines Bildes des zu erkennenden Trays, das vorläufig als ein leeres Tray bestimmt wird, von einem Bilderfassungsmodul (1001);
Bestimmen, für das Bild, ob ein gültiges leeres-Referenzbild-Tray für das Bild in dem Erkennungsmodul (1002) vorhanden ist;
Bestimmen, unter Verwendung eines ersten Verfahrens, ob das zu erkennende Tray, das vorläufig als ein leeres Tray bestimmt wird und dem Bild entspricht, ein leeres Tray ist, basierend auf dem Bild und/oder dem gültigen leeren-Referenzbild-Tray für das Bild, als Reaktion auf ein Vorhandensein des gültigen leeren-Referenzbild-Trays für das Bild; und
Bestimmen, unter Verwendung eines zweiten Verfahrens, das sich von dem ersten Verfahren unterscheidet, ob das zu erkennende Tray, das vorläufig als ein leeres Tray bestimmt wird und dem Bild entspricht, ein leeres Tray ist, basierend allein auf dem Bild, als Reaktion auf ein Fehlen des gültigen leeren-Referenzbild-Trays für das Bild; und
das Bilderfassungsmodul (1001), das konfiguriert ist, das Bild des zu erkennenden Trays, das vorläufig als ein leeres Tray bestimmt wird, zu erfassen,
wobei in einem Fall, dass das Tray als ein leeres Tray bestimmt wird, ein dem leeren Tray entsprechendes Bild als ein neues gültiges leeres-Referenzbild-Tray bestimmt wird; und
wobei das gültige leere-Referenzbild-Tray für das Bild ein leeres-Tray-Bild innerhalb einer Zeitperiode von einem Zeitpunkt, zwischen dem und einer Empfangszeit des Bildes ein Intervall ein erster vorbestimmter Schwellenwert ist, bis zu der Empfangszeit des Bildes ist.

9. Elektronische Vorrichtung, umfassend:
einen oder mehrere Prozessoren; und
einen Speicher, der konfiguriert ist, ein oder mehrere Programme zu speichern, wobei
das eine oder die mehreren Programme, wenn sie durch den einen oder die mehreren Prozessoren ausgeführt werden, den einen oder die mehreren Prozessoren veranlassen, das Verfahren gemäß Anspruch 1 zu implementieren.

10. Computerlesbares Speichermedium mit darauf gespeicherten ausführbaren Anweisungen, wobei die Anweisungen, wenn sie durch einen Prozessor ausgeführt werden, den Prozessor veranlassen, das Verfahren gemäß Anspruch 1 zu implementieren.

## Revendications

1. Un procédé de reconnaissance d'un plateau vide, comprenant :
mesurer, au moyen d'une unité de mesure de distance, une distance entre l'unité de mesure de distance et une surface de fond d'un plateau à reconnaître ou un point le plus élevé d'une surface supérieure d'un article dans le plateau à reconnaître dans une direction verticale ;
déterminer que le plateau à reconnaître n'est pas un plateau vide en réponse au fait que la distance est inférieure à un deuxième seuil prédéterminé ;
déterminer à titre préliminaire que le plateau à reconnaître est un plateau vide en réponse au fait que la distance est égale au deuxième seuil prédéterminé ;
recevoir, à partir d'un module de collecte d'images, une image du plateau à reconnaître, qui est déterminé à titre préliminaire comme étant un plateau vide ;
déterminer, pour l'image, si une image de référence valide de plateau vide pour l'image est présente dans un module de reconnaissance ;
déterminer, en utilisant une première méthode, si le plateau à reconnaître, qui est déterminé à titre préliminaire comme étant un plateau vide et correspond à l'image, est un plateau vide sur la base de l'image et/ou de l'image de référence valide de plateau vide pour l'image, en réponse à une présence de l'image de référence valide de plateau vide pour l'image ; et
déterminer, en utilisant une deuxième méthode différente de la première méthode, si le plateau à reconnaître, qui est déterminé à titre préliminaire comme étant un plateau vide et correspond à l'image, est un plateau vide sur la base de la seule image, en réponse à une absence de l'image de référence valide de plateau vide pour l'image,
où, dans un cas où le plateau est déterminé comme étant un plateau vide, une image correspondant au plateau vide est déterminée comme étant une nouvelle image de référence valide de plateau vide ; et
où l'image de référence valide de plateau vide pour l'image est une image de plateau vide dans une période de temps allant d'un instant, un intervalle entre lequel et un temps de réception de l'image étant un premier seuil prédéterminé, jusqu'au temps de réception de l'image.

2. Le procédé de reconnaissance d'un plateau vide selon la revendication 1, dans lequel le fait de déterminer, en utilisant une première méthode, si le plateau à reconnaître correspondant à l'image est un plateau vide sur la base de l'image et/ou de l'image de référence valide de plateau vide pour l'image comprend :
calculer une valeur de différence entre chaque pixel dans l'image et un pixel correspondant dans l'image de référence valide de plateau vide pour l'image, et calculer une somme de valeurs absolues de valeurs de différence respectives ou une somme de carrés des valeurs de différence respectives ;
déterminer que le plateau à reconnaître correspondant à l'image n'est pas un plateau vide en réponse au fait que la somme est supérieure ou égale à un troisième seuil prédéterminé ; et
déterminer que le plateau à reconnaître correspondant à l'image est un plateau vide en réponse au fait que la somme est inférieure au troisième seuil prédéterminé.

3. Le procédé de reconnaissance d'un plateau vide selon la revendication 1, dans lequel le fait de déterminer, en utilisant une première méthode, si le plateau à reconnaître correspondant à l'image est un plateau vide sur la base de l'image et/ou de l'image de référence valide de plateau vide pour l'image comprend :
combiner par paires un grand nombre d'images de plateaux vides obtenues à différents instants, et combiner par paires un grand nombre d'images de plateaux vides obtenues à différents instants et un grand nombre d'images de plateaux non vides obtenues à différents instants, de manière à obtenir un premier ensemble d'échantillons et un deuxième ensemble d'échantillons ;
exécuter une méthode d'apprentissage profond sur la base du premier ensemble d'échantillons et du deuxième ensemble d'échantillons, de manière à obtenir un premier modèle de reconnaissance ; et
déterminer si le plateau à reconnaître correspondant à l'image est un plateau vide en utilisant le premier modèle de reconnaissance.

4. Le procédé de reconnaissance d'un plateau vide selon la revendication 1, dans lequel le fait de déterminer, en utilisant une deuxième méthode différente de la première méthode, si le plateau à reconnaître correspondant à l'image est un plateau vide sur la base de la seule image comprend :
binariser l'image afin d'obtenir une image binarisée ;
calculer une somme de pixels de pixels dans l'image binarisée ;
déterminer que le plateau à reconnaître correspondant à l'image est un plateau vide en réponse au fait que la somme de pixels est inférieure à un quatrième seuil prédéterminé ; et
déterminer que le plateau à reconnaître correspondant à l'image n'est pas un plateau vide en réponse au fait que la somme de pixels est supérieure ou égale au quatrième seuil prédéterminé.

5. Le procédé de reconnaissance d'un plateau vide selon la revendication 1, dans lequel le fait de déterminer, en utilisant une deuxième méthode différente de la première méthode, si le plateau à reconnaître correspondant à l'image est un plateau vide sur la base de la seule image comprend :
prendre un grand nombre d'images de plateaux vides obtenues à différents instants et un grand nombre d'images de plateaux non vides obtenues à différents instants comme un troisième ensemble d'échantillons et un quatrième ensemble d'échantillons ;
exécuter une méthode d'apprentissage profond sur la base du troisième ensemble d'échantillons et du quatrième ensemble d'échantillons, de manière à obtenir un deuxième modèle de reconnaissance ; et
déterminer si le plateau à reconnaître correspondant à l'image est un plateau vide en utilisant le deuxième modèle de reconnaissance.

6. Le procédé de reconnaissance d'un plateau vide selon la revendication 1, comprenant en outre :
obtenir une région d'intérêt ROI dans l'image en utilisant une troisième méthode ; et
déterminer, en utilisant la première méthode ou la deuxième méthode, si le plateau à reconnaître correspondant à l'image est un plateau vide sur la base de la ROI, ou sur la base à la fois de la ROI et de l'image de référence valide de plateau vide pour l'image.

7. Le procédé de reconnaissance d'un plateau vide selon la revendication 6, dans lequel la troisième méthode comprend :
la détection de bords, la binarisation à seuil adaptatif, la mise en correspondance de gabarits, l'opération de gradient d'image, et l'apprentissage profond.

8. Un appareil de reconnaissance d'un plateau vide, comprenant :
un module de mesure de distance (104) configuré pour mesurer une distance entre le module de mesure de distance (104) et une surface de fond du plateau à reconnaître ou un point le plus élevé d'une surface supérieure d'un article dans le plateau à reconnaître dans une direction verticale,
un module de reconnaissance (1002) configuré pour :
déterminer que le plateau à reconnaître n'est pas un plateau vide en réponse au fait que la distance est inférieure à un deuxième seuil prédéterminé ; et
déterminer à titre préliminaire que le plateau à reconnaître est un plateau vide en réponse au fait que la distance est égale au deuxième seuil prédéterminé ;
recevoir, à partir d'un module de collecte d'images (1001), une image du plateau à reconnaître, qui est déterminé à titre préliminaire comme étant un plateau vide ;
déterminer, pour l'image, si une image de référence valide de plateau vide pour l'image est présente dans le module de reconnaissance (1002) ;
déterminer, en utilisant une première méthode, si le plateau à reconnaître, qui est déterminé à titre préliminaire comme étant un plateau vide et correspond à l'image, est un plateau vide sur la base de l'image et/ou de l'image de référence valide de plateau vide pour l'image, en réponse à une présence de l'image de référence valide de plateau vide pour l'image ; et
déterminer, en utilisant une deuxième méthode différente de la première méthode, si le plateau à reconnaître, qui est déterminé à titre préliminaire comme étant un plateau vide et correspond à l'image, est un plateau vide sur la base de la seule image, en réponse à une absence de l'image de référence valide de plateau vide pour l'image ; et
le module de collecte d'images (1001) configuré pour collecter l'image du plateau à reconnaître, qui est déterminé à titre préliminaire comme étant un plateau vide,
où, dans un cas où le plateau est déterminé comme étant un plateau vide, une image correspondant au plateau vide est déterminée comme étant une nouvelle image de référence valide de plateau vide ; et
où l'image de référence valide de plateau vide pour l'image est une image de plateau vide dans une période de temps allant d'un instant, un intervalle entre lequel et un temps de réception de l'image étant un premier seuil prédéterminé, jusqu'au temps de réception de l'image.

9. Un dispositif électronique, comprenant :
un ou plusieurs processeurs ; et
une mémoire configurée pour stocker un ou plusieurs programmes, dans lequel
le ou les programmes, lorsqu'ils sont exécutés par le ou les processeurs, amènent le ou les processeurs à mettre en œuvre le procédé selon la revendication 1.

10. Un support de stockage lisible par ordinateur sur lequel sont stockées des instructions exécutables, dans lequel les instructions, lorsqu'elles sont exécutées par un processeur, amènent le processeur à mettre en œuvre le procédé selon la revendication 1.
